(19) Europäisches Patentamt
European Patent Office
Office européen des brevets

(11) **EP 4 434 334 A1**

(12) **EUROPEAN PATENT APPLICATION**

(43) Date of publication:
**25.09.2024 Bulletin 2024/39**

(51) International Patent Classification (IPC):
***A01K 61/90*** (2017.01)

(21) Application number: **23163855.2**

(52) Cooperative Patent Classification (CPC):
**A01K 61/90**

(22) Date of filing: **23.03.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Furuno Electric Company Limited Hyogo 662-8580 (JP)**

(72) Inventor: **IKEGAMI, Atsushi Nishinomiya-city, 662-8580 (JP)**

(74) Representative: **CSY London Helios Court 1 Bishop Square Hatfield Hertfordshire AL10 9NE (GB)**

(54) **FISH CHARACTERISTIC DETERMINATION SYSTEM, FISH CHARACTERISTIC DETERMINATION METHOD AND PROGRAM**

(57) A fish characteristic determination system for determining a characteristic of a fish swimming in water is provided. The system includes a camera system (20), a fish length calculation unit (101a), and a condition factor calculation unit (101b). The camera system (20) is configured to acquire an image of the fish. The fish length calculation unit (101a) is configured to calculate a length of the fish by processing the image of the fish. The condition factor calculation unit (101b) is configured to calculate a condition factor of the fish from the calculated length. The condition factor is calculated from an exponential function of the length.

FIG. 4

EP 4 434 334 A1

**Description**

The present invention relates to a fish characteristic determination system for determining a characteristic of a fish swimming in water, a fish characteristic determination method for determining the characteristic of the fish swimming in water, and a program for making a computer that executes a function for determining the characteristic of the fish swimming in water.

Industrial aquaculture requires visualization of a characteristic of a fish in a fish cage to improve productivity. Condition factor of the fish in the fish cage is an important factor in improving productivity, along with fish length (e.g., fork length) and body weight. Fish length (fork length) is a major indicator of fish skeletal growth, and body weight is a direct indicator of fish shipping plans. Condition factor is a major indicator of fish fleshiness.

Traditionally, the visualization of such characteristics has been done by a user of the fish cage by actually measuring the length and weight of the fish in the fish cage. Specifically, the user pulls up the net of the fish cage to catch the fish, anesthetizes the caught fish, measures the length and weight of each fish, and calculates the condition factor of the fish from these measurements. The measured fish are returned to the fish cage. Such work is done on about 100 fish in the cage. This work is rather cumbersome and hard.

Contrarily, in recent years, cameras have been used to acquire images of the fish in the fish cage, which are then processed to obtain the length (fork length) and body height of the fish. For example, the length L of the fish acquired from the camera image is applied to following equation (1) to calculate the weight W of the fish. In the following equations, the unit of length L is "centimeter (cm)", and the unit of weight W is "gram (g)".

$$W = \alpha 1 \times L^{\alpha 2} \qquad (1)$$

The calculated weight is then applied to following equation (2) to calculate the condition factor CF of the fish.

$$W = CF \times (L^3/100) \qquad (2)$$

Such calculation method is described, for example, in Froese R (2006) "Cube law, condition factor and weight - length relationships: history, meta-analysis and recommendations," J Appl Ichthyol 22 (2006), 241 -253.

However, in the above equation (1), thickness of the fish, that is, a degree of fattening of the fish, is not taken into account, making it difficult to calculate the weight of the fish with high accuracy. Therefore, the accuracy of calculating the condition factor of the fish based on the above equation (2) also decreases. On the other hand, if the condition factor of fish can be accurately calculated, the weight of fish can be accurately calculated from the above equation (2).

In view of such issues, the present invention aims to provide a fish characteristic determination system, a fish characteristic determination method and a program that can accurately calculate the condition factor of the fish.

In accordance with an embodiment, a first aspect of the present invention relates to a fish characteristic determination system for determining a characteristic of a fish swimming in water. The system, according to the first aspect, includes a camera system, a fish length calculation unit, and a condition factor calculation unit. The camera system is configured to acquire an image of the fish. The fish length calculation unit is configured to calculate a length of the fish by processing the image of the fish. The condition factor calculation unit is configured to calculate a condition factor of the fish from the calculated length. The condition factor is calculated from an exponential function of the length.

The larger the length of the fish, greater is the potential of getting a fattier fish. As described above, according to the fish characteristic determination system in this aspect, the condition factor of the fish is calculated from the exponential function of length of the fish. Therefore, the condition factor of the fish is accurately calculated.

In the fish characteristic determination system according to the present embodiment, the exponential function may be expressed as $CF = a^{b \times L + c}$, where CF is the condition factor, L is the length, a is the base of the exponential function, b is a first parameter, and c is a second parameter.

Using this equation as the exponential function, the condition factor CF of fish is accurately calculated by adjusting the first and second parameters.

Here, the second parameter (c) may change with time of year at which the fish swims or a temperature of the water in which the fish swims.

The condition factor of the fish also varies according to their predation activity which changes depending on the temperature of the water in which they swim and the time of year. Therefore, by changing the second parameter (c) of the above equation with the time of year in which the fish swim or the temperature of the water in which the fish swim, the accuracy of the condition factor of fish calculated from the above equation is enhanced.

Moreover, the first parameter (b) may be the same regardless of time of the year at which the fish swims or a temperature of the water in which the fish swims.

As described above, the larger the length of the fish, the higher is the potential for fattening. This is based on the skeleton of the fish, not on a degree of predation activity such as time of the year or temperature of the water. On the other hand, the first parameter (b) is multiplied by the length L of the fish to adjust the degree of fattening based on the length L (skeleton). For this reason, the first parameter (b) is the same as long as the relationship between the length of the fish and the condition factor is adjusted, in view of the relationship between the time of year when the fish swims and the temperature of the water in which the fish swims. Therefore, as described above, by setting the first parameter (b) of the above equation to be the same regardless of the time of the year at which the fish swims or the temperature of the water in which the fish swims, the condition factor of the fish is accurately calculated from the above equation.

Therefore, the above exponential function have only one parameter (c) that changes with a time of year at which the fish swims or a temperature of the water in which the fish swims. With this, as described above, the condition factor of the fish can be accurately calculated according to the time of year at which the fish swims or the temperature of the water in which the fish swims.

Here, the first parameter (b) and the second parameter (c) may be predetermined for a given fish species.

The fattening of fish can be different for each fish species. Therefore, the first parameter (b) and the second parameter (c) may be predetermined for a given fish species, so that the condition factor of fish of the given fish species can be accurately calculated.

Moreover, the first parameter (b) and the second parameter (c) is predetermined for a given fish seed.

The fattening of fish is different for each fish seed. For example, the fattening of fish depends on whether it is natural or artificial seed, and the fattening of fish depends on production area or lot of artificial seed. Therefore, as described above, the first parameter (b) and the second parameter (c) are predetermined for a given fish seed, so that the condition factor of fish is accurately calculated.

According to the first aspect, when the base (a) of the exponential function is more than 1, the first parameter (b) may be positive, and when the base (a) of the exponential function is less than 1, the first parameter (b) may be negative. That is, the exponential function is an increasing function.

Thus, the degree of fattening of fish according to the length of fish can be defined by this exponential function. Therefore, the condition factor of fish can be accurately calculated from this exponential function.

The fish characteristic determination system according to this aspect may further include a fish cage in which the fish swims. Thus, the condition factor of fish cultured in the fish cage can be calculated with high accuracy.

Here, the fish swimming in the fish cage may be raised from an artificial fish seed. In this case, characteristic of fish in the fish cage can be more uniform than in the case of natural fish seed. Thus, the parameters of the exponential function can be set to suit the fish swimming in the fish cage, and the condition factor of fish in the fish cage can be accurately calculated.

In accordance with an embodiment, a second aspect of the present invention relates to a fish characteristic determination method for determining a characteristic of a fish swimming in water. The method according to the present embodiment includes acquiring an image of the fish, calculating a length of the fish by processing the image of the fish, and calculating a condition factor of the fish from the calculated length. The condition factor is calculated from an exponential function of the length.

According to the fish characteristic determination method, according to the present embodiment, the same effect as the fish characteristic determination system according to the first aspect can be achieved.

In accordance with an embodiment, a third aspect of the present invention relates to a computer program comprising instructions which, when executed by a computer, cause the computer to carry out the method according to the second aspect.

According to the present embodiment, the same effect as the fish characteristic determination system according to the first aspect can be achieved.

As described above, according to the present invention, a fish characteristic determination system, a fish characteristic determination method, and a program capable of accurately calculating the condition factor of fish can be provided.

The effect or significance of the present invention will be further clarified by the description of the following embodiments. However, the following embodiments are only examples when implementing the present invention, and the present invention is not in any way limited to those described in the following embodiments.

Fig. 1 is a plan view showing a configuration of a fish characteristic determination system, according to an embodiment;

Fig. 2 is a cross-sectional view showing the configuration of the fish characteristic determination system, according to an embodiment;

Fig. 3 is a diagram showing a configuration of a camera system, according to an embodiment;

Fig. 4 is a block diagram showing a configuration of a processing unit, according to an embodiment;

Fig. 5(a) and Fig. 5(b) are diagrams showing a configuration of parameter information, according to an embodiment;

Fig. 6(a) is a graph showing an example of waveforms of an exponential function for calculation of a condition factor when first and second parameters are optimized, according to an embodiment;

Fig. 6(b) is a graph showing an example of waveforms of a function for calculation of the condition factor, according to a reference example;

Fig. 7(a) is a graph showing, for a given fish species, a relationship between the condition factor calculated by a formula in which the first and second parameters are optimized, and an actual measurement of the condition factor (measurement data from catch), according to an embodiment;

Figs. 7(b) - 7(c) are graphs showing, for a given fish species, a relationship between the condition factor calculated by a formula in which the parameters are optimized according to a comparison example, and an actual measurement of the condition factor (measurement data from catch), according to an embodiment;

Fig. 7(d) is a graph in which the plots from Fig. 7(a) coming from fish of natural seeds are removed and only the plots coming from fish of artificial seeds are left, according to an embodiment;

Fig. 8 is a flowchart showing a determination process of fish characteristic, according to an embodiment;

Fig. 9 is a diagram showing a configuration of parameter information, according to a modification; and

Fig. 10 is a diagram showing the configuration of parameter information according to another modification.

Embodiments of the invention will be described below with reference to the drawings. For convenience, XYZ axes perpendicular to each other are added to the drawings as appropriate. The X and Y axes are horizontal, and the Z axis is vertical.

In the following embodiment, the present invention is applied to a fish characteristic determination system that images fish in a fish cage by placing a boat alongside the fish cage. However, the present invention is not in any way limited to the following embodiment

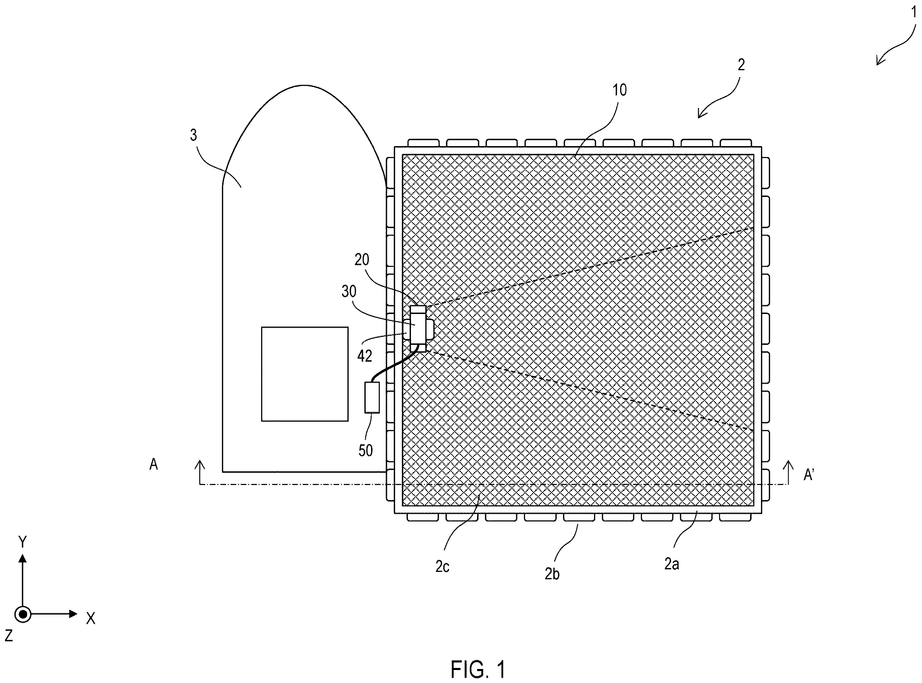

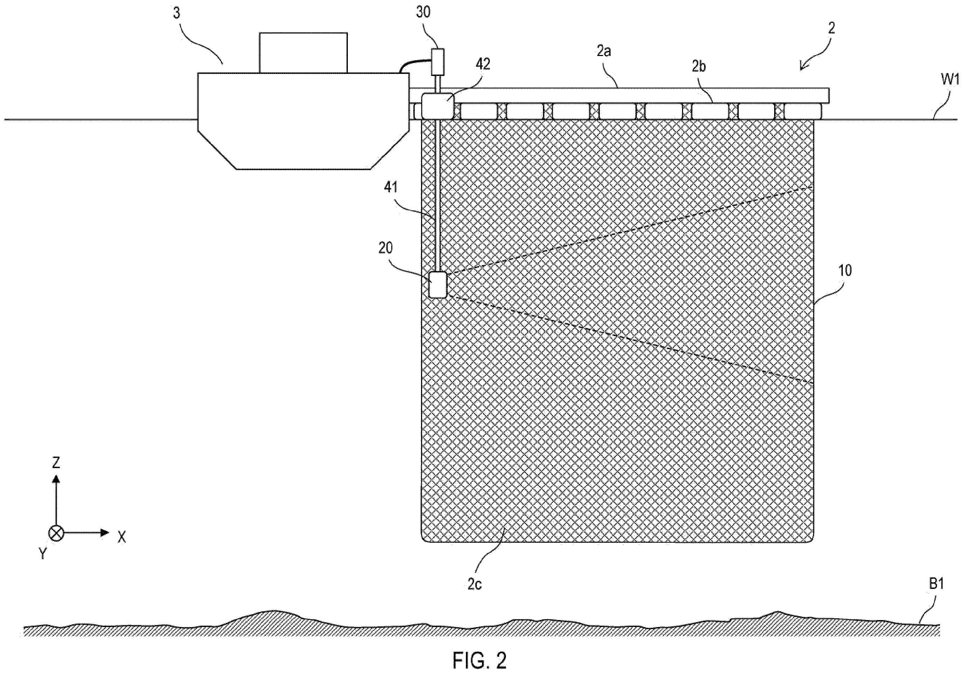

Fig. 1 is a plan view showing a configuration of a fish characteristic determination system (1). Fig. 2 is a cross-sectional view of the fish characteristic determination system (1) of Fig. 1 cut at position A-A'.

Referring to Figs. 1 and 2, the fish characteristic determination system (1) is equipped with a raft (2) installed at sea. The raft (2) is anchored to seabed (B1) by ropes, etc. (not shown), such that horizontal movement is restricted.

The raft (2) is equipped with a raft frame (2a) made of wood, metal pipes, etc., multiple floats (2b) for floating the raft frame (2a) on the sea, and a net (2c) for housing fish. The raft frame (2a) has an approximately rectangular shape in plan view. The multiple floats (2b) are installed on a lower surface of the raft frame (2a) along an outer circumference of the raft frame (2a). Buoyancy of the multiple floats (2b) causes the raft frame (2a) to float on sea surface (W1).

The net (2c) is set in an area inside the raft frame (2a). As shown in Fig. 2, the net (2c) hangs in a rectangular shape to a given depth. The upper end of the net (2c) extends to the height of an upper surface of the raft frame (2a). The net (2c) is composed of two sides facing in the X-axis direction, two sides facing in the Y-axis direction, and a bottom surface connected to each other. The area surrounded by the net (2c) has an open top surface. As shown in Fig. 2, the net (2c) hangs down to near the seabed (B 1). The area enclosed by the net (2c) constitutes a fish cage (10).

Fish for aquaculture are transferred to the fish cage (10). As shown in Figs. 1 and 2, a boat (3) is laid alongside a negative X-axis side of the raft (2). Fish for aquaculture are housed in an inboard cage (not shown) of the boat (3). Fish housed in the inboard cage are transferred from the inboard cage to the fish cage (10) using nets, etc.

A user of the fish characteristic determination system (1) measures length, weight and condition factor (CF) of the fish in the fish cage (10) to confirm growth of the fish being farmed in the fish cage (10). To this end, the user uses a camera system (20) to image the fish in the fish cage (10). As shown in Fig. 2, the camera system (20) is connected to a relay (30) via a cable (41). The relay (30) is installed on a float (42) floating on the sea surface (W1). The relay (30) is connected to a processing unit (50) on the boat (3). The image captured by the camera system (20) is transmitted to a processing unit (50) via the cable (41) and the relay (30).

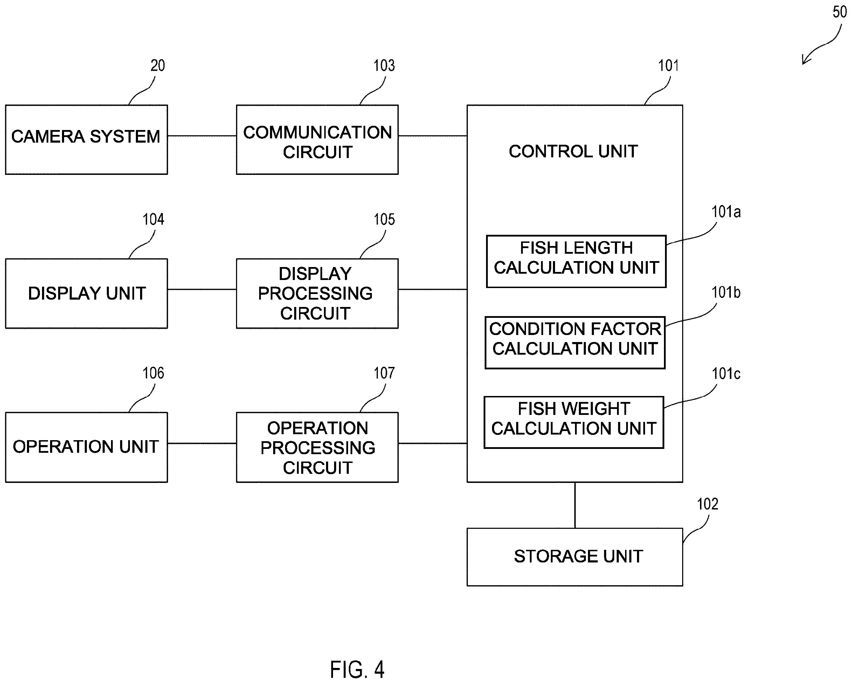

When checking the growth of the fish, the user sinks the camera system (20) from the boat (3) into the fish cage (10), and then activates a program for fish characteristic determination installed in the processing unit (50). Thus, the image captured by the camera system (20) is transmitted to the processing unit (50) and processed by the processing unit (50). This processing determines the length, condition factor (CF) and weight of the fish in the fish cage (10). The determination processing of fish characteristic by the processing unit (50) is described later with reference to Figs. 4 to 6.

The camera system (20) may be installed in the fish cage (10) in advance. For example, in the configuration of Figs. 1 and 2, the float (42) may be fixed to the raft frame (2a), and the camera system (20) may be installed in the fish cage (10) in advance. In this case, the user may cable the relay (30) at offshore to the processing unit (50) in the boat (3) after the boat (3) is laid alongside the fish cage (10) as shown in Fig. 2.

In addition, if the camera system (20) is thus fixed to the fish cage (10), the relay (30) may have a radio transmission function capable of communicating with a land-based network via an access point. Thus, the user can receive on land the images captured by the camera system (20) at the processing unit (50) by connecting the processing unit (50) to the relay (30) without going to the fish cage (10) on the boat (3). Therefore, the growth of the fish in the fish cage (10) can be confirmed on land.

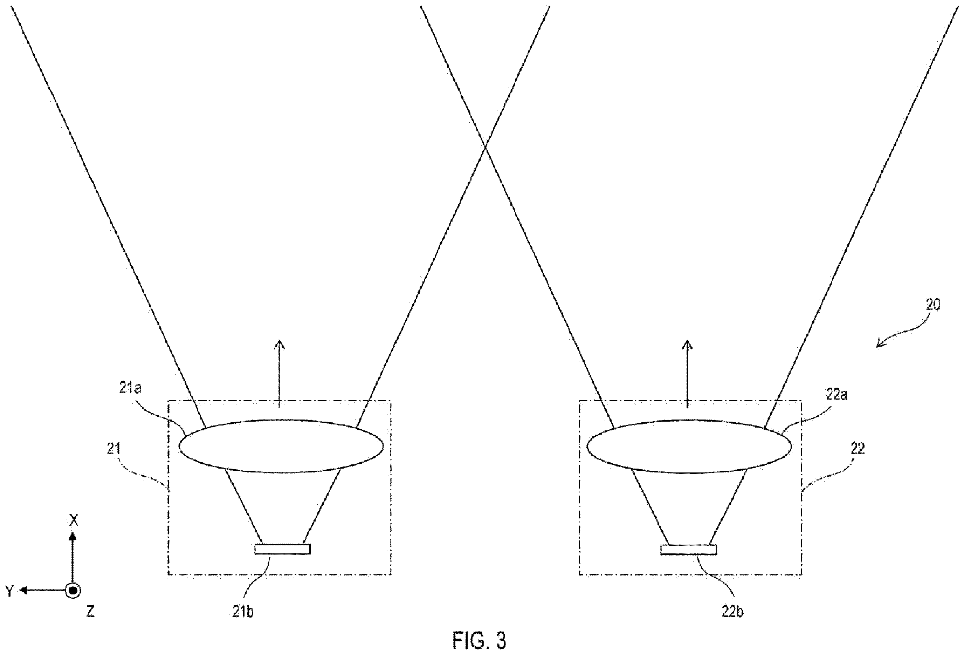

Fig. 3 is a diagram showing a configuration of the camera system (20). The camera system (20) includes two cameras (21), (22). The two cameras (21), (22) are arranged side by side in the Y-axis direction at a given interval. That is, the two cameras (21), (22) constitute a stereo camera. The two cameras (21), (22) have parallax corresponding to the position difference (i.e., the interval) in the Y-axis direction. With this parallax, a distance to the same object contained in each captured image of the two cameras (21), (22) can be calculated.

The two cameras (21), (22) are respectively equipped with lenses (21a), (22a) of a given viewing angle and image sensors (21b), (22b) in which the image of a captured area is formed by the lenses (21a), (22a). In Fig. 3, outermost rays of the captured area (range of viewing angle) of the lenses (21a), (22a) are schematically shown as solid lines.

Each of the lenses (21a), (22a) may not necessarily be composed of one lens but may be composed of several lenses combined. The image sensors (21b) and (22b) may be color image sensors such as CMOS image sensors and CCDs. The lenses (21a) and (22a) are oriented in almost the same direction. More specifically, the direction in which the lenses (21a) and (22a) are oriented is horizontal. However, not limited to this, the direction in which the lenses (21a) and (22a) are oriented may slightly deviate.

Fig. 4 is a block diagram showing a configuration of the processing unit (50). For convenience, Fig. 4 includes the camera system (20) that communicates with the processing unit (50).

The processing unit (50) includes a control unit (101), a storage unit (102), a communication circuit (103), a display unit (104), a display processing circuit (105), an operation unit (106), and an operation processing circuit (107). The processing unit (50) may consist of a personal computer. Alternatively, the processing unit (50) may consist of a dedicated machine.

The control unit (101) is equipped with an arithmetic processing circuit such as a Central Processing Unit (CPU) and executes control processing for fish characteristic determination by a program stored in the storage unit (102). The storage unit (102) is equipped with a storage media such as Read Only Memory (ROM), Random Access Memory (RAM) and hard disk. The storage unit (102) stores a program for implementing fish characteristic determination processing.

The communication circuit (103) communicates with the camera system (20) in response to control from the control unit (101). As described above, the communication circuit (103) acquires captured images from the two cameras (21) and (22) of the camera system (20) in response to control from the control unit (101). The communication circuit (103) outputs the acquired images to the control unit (101).

The display unit (104) is equipped with a display such as a liquid crystal display. The display processing circuit (105) causes the display unit (104) to display an image according to control from the control unit (101). The operation unit (106) is provided with input means such as an operation key and a mouse. The operation processing circuit (107) outputs a signal corresponding to the operation on the operation unit (106) to the control unit (101) in response to the control from the control unit (101). The display unit (104) and the operation unit (106) may consist of a liquid crystal panel with a touch panel superimposed on the liquid crystal display.

In this embodiment, functions of a fish length calculation unit (101a), a condition factor calculation unit (101b) and a fish weight calculation unit (101c) are given to the control unit (101) by a program stored in the storage unit (102).

The fish length calculation unit (101a) analyzes and processes the image acquired by the camera system (20) to detect an area of the fish in the image, and further calculates the length (L) of the fish in the area based on the parallax between the cameras (21) and (22). In this embodiment, the fork length is calculated as the length (L) of the fish. However, the calculated length (L) of the fish is not limited to this and may be any other length for which the length of the fish can be specified.

The condition factor calculation unit (101b) calculates the condition factor (CF) of the fish from the length (L) of the fish calculated by the fish length calculation unit (101a). A calculation method of the condition factor (CF) is explained later.

The fish weight calculation unit (101c) calculates the body weight (W) of the fish by applying the condition factor (CF) calculated by the condition factor calculation unit (101b) and the length (L) of the fish calculated by the fish length calculation unit (101a) to the above equation (2). That is, the fish weight calculation unit (101c) calculates the body weight of the fish from a multiplication of the condition factor (CF) calculated by the condition factor calculation unit (101b) and the length (L) of the fish calculated by the fish length calculation unit (101a).

The control unit (101) makes the display unit (104) display the calculation results of the fish length calculation unit (101a), the condition factor calculation unit (101b) and the fish weight calculation unit (101c). For example, from the length (L), condition factor (CF) and body weight (W) from multiple fish obtained from images during an imaging period, the control unit (101) calculates a mean value, a median value or a mode value, and displays the calculated value on the display unit (104). Alternatively, the control unit (101) may generate histograms from the length (L), condition factor (CF) and body weight (W) of the multiple fish acquired during the imaging period, respectively, and display the generated histograms on the display unit (104). These displays enable the user to grasp growth condition (fish length (L), condition factor (CF) and weight (W)) of the fish in the fish cage (10).

However, in the conventional calculation method, the length (L) of the fish calculated from the captured image of the camera system (20) is first applied to the above equation (1) to calculate the weight (W) of the fish. The calculated weight (W) is then applied to the above equation (2) to calculate the condition factor (CF) of the fish.

Since the above equation (1) does not take into account the thickness of the fish, that is, how fat the fish is, it is difficult to calculate the weight (W) of the fish with high accuracy. For this reason, the condition factor (CF) of the fish calculated by applying this weight W to the above equation (2) is also low in accuracy.

Therefore, in the present embodiment, a new calculation method of the condition factor (CF) of fish is executed in the condition factor calculation unit (101b). That is, the larger the length (L) of fish, the higher the fish potential for fattening. The condition factor (CF) of fish can be accurately calculated by an exponential function of the length of fish.

In addition, the condition factor (CF) of the fish also varies according to their predation activity which changes depending on the temperature of the water in which they swim and the time of year. The temperature of the water varies according to a time of year, such as the months and the seasons. Therefore, depending on the temperature of the water in which the fish swim and/or the time of year, the fat of the fish also varies. Therefore, by adjusting the above exponential function according to the temperature of the water in which the fish swim and/or the time of year, the accuracy of calculating the condition factor (CF) of the fish can be further improved.

Furthermore, the weight of the fish can vary from seed to seed. For example, fattening of fish can vary depending on whether it is a natural seed or an artificial seed, or depending on where the artificial seed comes from (where the parents come from) and the lot (for example, a group of eggs laid by a single spawning). Therefore, by adjusting the above exponential function for each fish seed, the accuracy of calculating the condition factor (CF) of fish can be further improved.

In view of the above, in this embodiment, the exponential function of the fish length (L) (fork length) is used to calculate the condition factor (CF) of fish, and further, a first and a second parameter are included in this exponential function. The first parameter is a parameter multiplied by the fish length (L), and the second parameter is a parameter for adjusting the condition factor (CF) according to the temperature of the water and/or the time of year. The values of these parameters are then changed according to the seed of the fish housed in the fish cage (10).

Specifically, the condition factor calculation unit (101b) calculates the condition factor (CF) of the fish from following equation (3).

$$CF = e^{b \times L + c} \qquad (3)$$

In this equation, (b) is the first parameter described above and (c) is the second parameter described above. These parameters are stored in advance in the storage unit (102) as part of the program described above. These parameters are also stored in the storage unit (102) for each fish species.

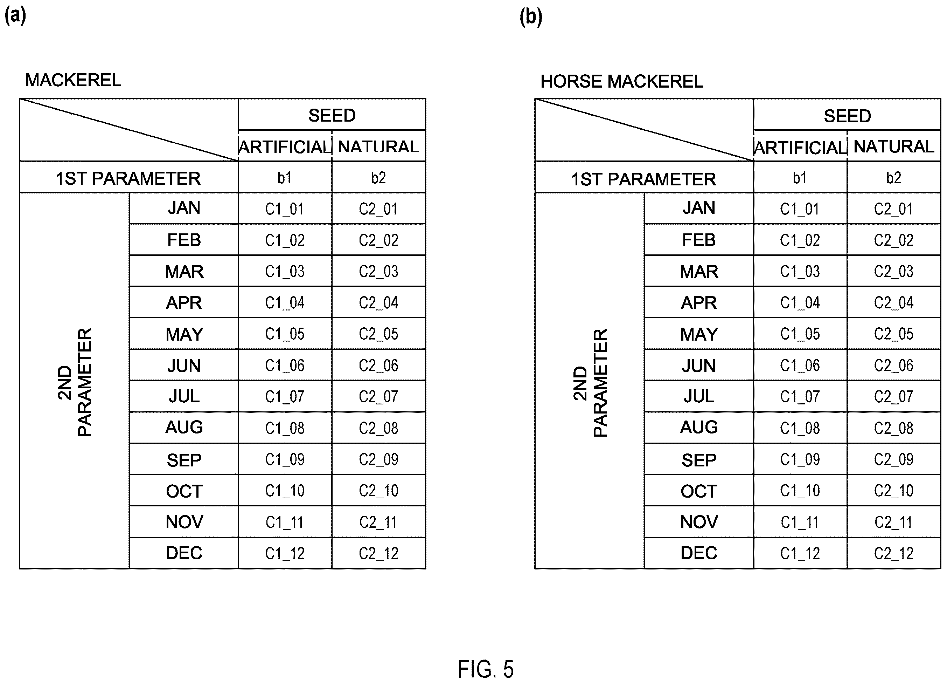

Fig. 5(a) and Fig. 5(b) are diagrams showing a configuration of parameter information (first parameter (b), and second parameter (c)) stored in the storage unit (102).

Fig. 5(a) and Fig. 5(b) show the parameter information for mackerel and horse mackerel, respectively. Here, the second parameter (b) is set for each month of the year. Also, the values of the first parameter (b) and the second parameter (c) are changed depending on whether the seed is artificial or natural. Artificial seeds are eggs and young fish that users purchased from seed centers and other sources and that are now cultivated in the fish cage (10). Natural seeds are young fish and fish that users captured from fishing grounds and that are now cultivated in cages. It is assumed here that fish of the same seed are mainly cultivated in the same fish cage (10). For fish species other than mackerel and horse mackerel, parameter information of the same configuration is also stored in the storage unit (102).

The first parameter (b) and the second parameter (c) included in the parameter information are adjusted to obtain an optimum value for each fish species. A creator of the parameter information adjusts the first parameter (b) and the second parameter (c) of each month for each fish species and seed so that the condition factor (CF) calculated by the above equation (3) best fits actual measured condition factor of fish, and provides the adjusted first parameter (b) and the adjusted second parameter (c) of each month to the user along with the above program.

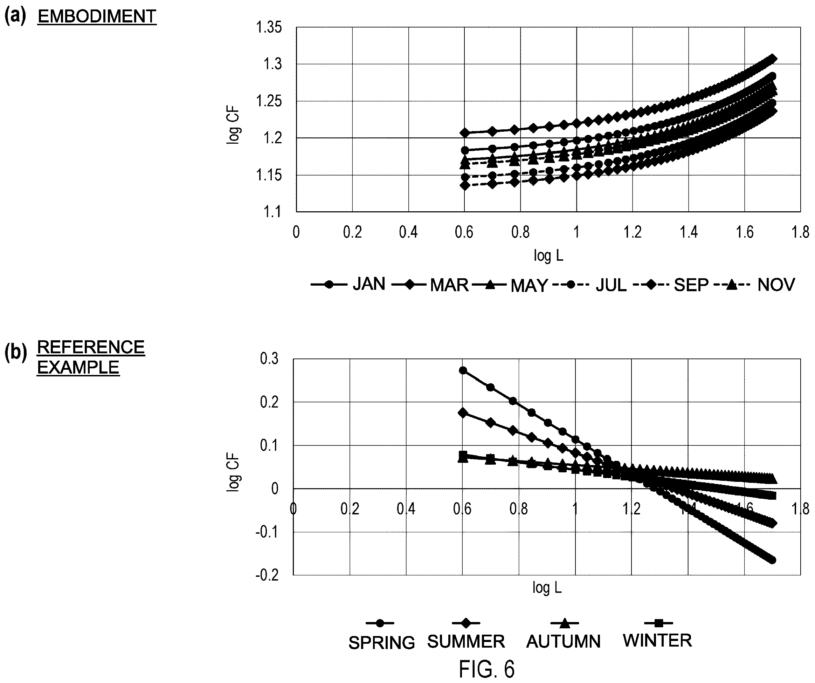

Fig. 6(a) is a graph showing an example of waveforms of an exponential function for calculation of a condition factor when first and second parameters are optimized. The graph shows the waveforms of the above equation (3) when the first parameter (b) and the second parameter (c) are optimized.

Fig. 6(a) shows six graphs corresponding to January, March, May, July, September and November, respectively. As shown in Fig. 6(a), the exponential function of equation (3) is an increasing function by optimizing the first parameter (b) and the second parameter (c). Here, since the base (e) of equation (3) is greater than one, the first parameter (b) is set to a positive value. In the 6 months illustrated in Fig. 6(a), the condition factor (CF) for the same length (L) is highest in March and lowest in September. In July and September, the temperature in the water is too high, so predation activity stagnates. This is why September has the lowest condition factor (CF). Predation activity also stagnates during the cold season but is highest after the cold season. Therefore, March has the highest condition factor (CF).

As a reference example, a graph of a formula for calculating the condition factor (CF) described in the following prior literature is shown in Fig. 6(b).

Froese R (2006) "Cube law, condition factor and weight-length relationships: history, meta-analysis and recommendations," J Appl Ichthyol 22 (2006), 241-253

In this reference example, the condition factor (CF) is calculated by the following formula:

$$CF = m \times L^n \qquad (4)$$

Parameters (m) and (n) in equation (4) are optimized according to the season (time of year). As shown in Fig. 6(b), equation (4) is a decreasing function. Equation (4) is defined for wild fish that are freely mobile according to the season. Therefore, equation (4) is not suitable for the calculation of the condition factor (CF) of farmed fish restrained in the fish cage (10). For this reason, equation (4) is a decreasing function as shown in Fig. 6(b), which is significantly different from the waveforms of the exponential function (increasing function) in equation (3).

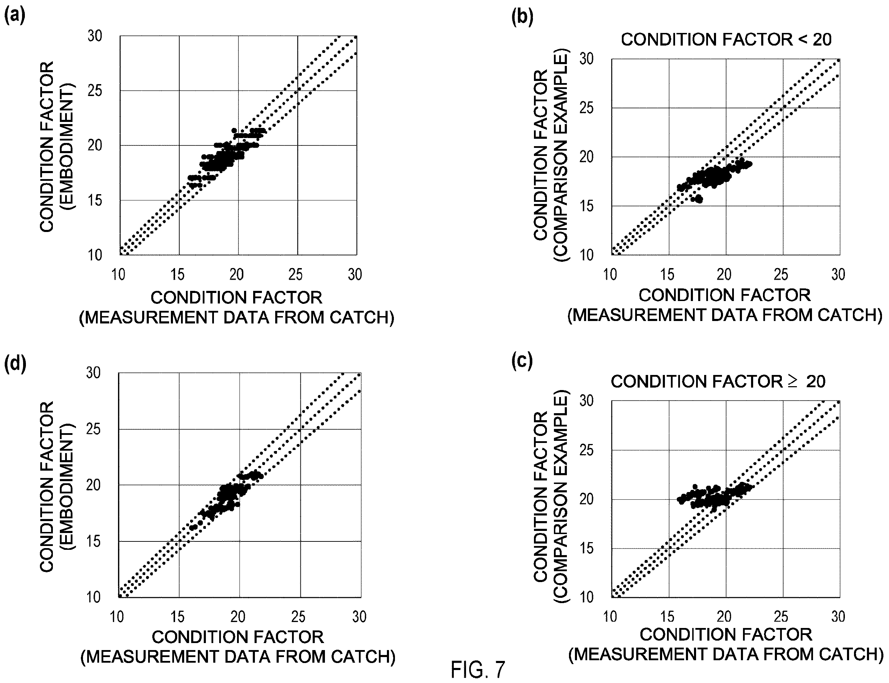

Fig. 7(a) is a graph showing, for a given fish species, a relationship between the condition factor (CF) (embodiment) according to equation (3) when the first parameter (b) and the second parameter (c) are optimized for a given fish species, and a measured condition factor (CF) (measurement data from catch).

Here, the length (L) (fork length) of a fish is calculated by imaging each fish with the camera system (20), and the calculated length (L) is applied to equation (3) above to calculate the condition factor (CF) (embodiment: vertical axis) of the fish. The fish is actually caught and measured to obtain length (L) and body weight (W), and the obtained length (L) and body weight (W) are applied to equation (2) above to calculate the condition factor (CF) (measurement data from catch: horizontal axis). This task is performed for the number of plots in Fig. 7(a). Each plot corresponds to one fish. A plot for a fish is placed at the intersection of the condition factor (CF) (embodiment: vertical axis) obtained from equation (3) and the condition factor (CF) (measurement data from catch: horizontal axis) obtained from actual measurement for that fish.

Each plot is obtained at different time of year and for different fish seed. Here, the seeds are divided into two types: artificial and natural. For each seed and time of year, the first parameter (b) and the second parameter (c) of equation (3) are optimized, and the condition factor (CF) of the fish corresponding to each plot is obtained from equation (3).

In Fig. 7(a), three approximate lines are shown by dashed lines. The approximate line in the middle is the approximate line when the condition factor (CF) (embodiment) and the condition factor (CF) (measurement data from catch) match. The approximate line in the upper side is the approximate line when the condition factor (CF) (embodiment) is slightly higher than the condition factor (CF) (measurement data from catch), and the approximate line in the lower side is the approximate line when the condition factor (CF) (embodiment) is slightly lower than the condition factor (CF) (measurement data from catch).

For comparison, a relationship between the condition factor (CF) (comparison example) and the actual value of the condition factor (CF) (measurement data from catch), when the body weight (W) of fish is determined by the following formula, is obtained.

$$W = \beta 1 \times L^{\beta 2} \times H^{\beta 3} \qquad (5)$$

In equation (5), (H) is the height of the fish. In equation (5), compared with equation (1) above, the height H of the fish is further added to calculate the weight W of the fish, and in contrast to the equation (1) above, the thickness of the fish, that is, how fat the fish is, is not added to the calculation of the weight W.

The following equation is derived from equation (5) and equation (2) above.

$$CF = \alpha 0 \times (L^{\beta 2} \times H^{\beta 3})/L^3 \qquad (6)$$

In the comparison example, the condition factor (CF) of the fish is calculated by applying the length (L) of the fish acquired from the captured image of the camera system (20) to equation (6).

Fig. 7(b) and Fig. 7(c) are graphs showing a relationship between the measured condition factor (CF) (measurement data from catch) and the calculated condition factor (CF) (comparison example) according to equation (6) above when each parameter of equation (6) is optimized for a given fish species. In Fig. 7(b) and Fig. 7(c), three approximate lines like those in Fig. 7(a) are also shown by dashed lines.

In the comparison example, the length (L) (fork length) and body height (H) of each fish are calculated by imaging each fish with the camera system (20), and the calculated length (L) and body height (H) are applied to equation (6) above to calculate the condition factor (CF) (comparison example: vertical axis) of the fish. Furthermore, the fish is actually caught and measured to obtain length (L) and body weight (W), and the obtained length (L) and body weight (W) are applied to equation (2) above to calculate the condition factor (CF) (measurement data from catch: horizontal axis). This task is performed for the number of plots in Fig. 7(b) and Fig. 7(c). Each plot corresponds to one fish. A plot for a fish is placed at the intersection of the condition factor (CF) (comparison example: vertical axis) obtained from equation (6) and the condition factor (CF) (measurement data from catch: horizontal axis) obtained from actual measurement for that fish.

As in Fig. 7(a), each plot is obtained at different time of year for different fish seed. Here, the seeds are divided into two types: artificial and natural. For each seed and time of year, each parameter of equation (6) above is optimized, and the condition factor (CF) of the fish corresponding to each plot is obtained from equation (6).

In addition, in the comparison example, each parameter of equation (6) above was optimized with the assumption that the condition factor (CF) was less than 20 and with the assumption that the condition factor (CF) was 20 or more, and two versions of equation (6) were set. Then, the condition factor (CF) (comparison example) of each fish was calculated by applying the length (L) and the body height (H) of each fish acquired from the captured image of the camera system (20) to these two versions of equation (6), respectively.

Fig. 7(b) shows the results using equation (6) adjusted on the assumption that the condition factor (CF) is less than 20, and Fig. 7(c) shows the results using equation (6) adjusted on the assumption that the condition factor CF is 20 or more.

As shown in Fig. 7(b) and Fig. 7(c), in the comparison example, many of the plots deviated significantly from the middle approximate line, regardless of which formula is used. In contrast, in the embodiment, as shown in Fig. 7(a), most of the plots converged near the middle approximate line and fell within a range of the upper and lower approximate lines. From this, it is confirmed that equation (3) above is extremely effective for calculating the condition factor (CF).

When the plots of fish from natural seeds are excluded from the results in Fig. 7(a) and only the plots of fish from artificial seeds are left, most of these plots are close to the middle approximate line as shown in Fig. 7(d). This is probably because a growth characteristic of fish from artificial seeds is more uniform than that of fish from natural seeds. From this, it can be said that equation (3) above is more preferable when fish from artificial seeds are grown in the fish cage (10).

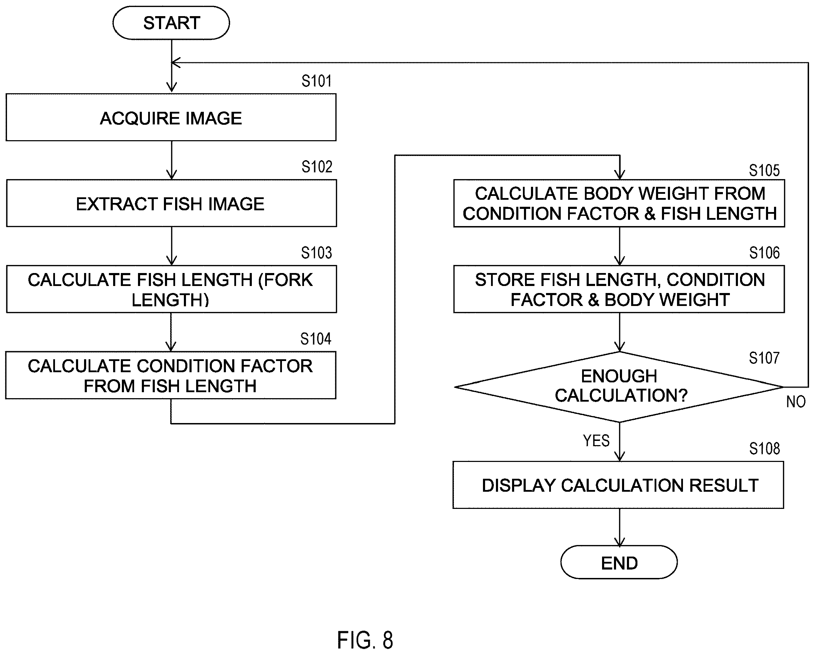

Fig. 8 is a flowchart showing a determination process of fish characteristic.

The processing of Fig. 8 is executed in the control unit (101) of Fig. 4. The processing of steps (S103), (S104) and (S105) is executed by the functions of the fish length calculation unit (101a), the condition factor calculation unit (101b) and the fish weight calculation unit (101c), respectively.

When the fish characteristic determination processing is started, the control unit (101) acquires the image from the camera system (20) (two cameras (21), (22)), at step (S101) and extracts the image of the fish from the acquired image, at step (S102). From the extracted image of the fish, the control unit (101) calculates the length (L) (fork length) of the fish based on the parallax between the two cameras (21) and (22), at step (S103) and applies the calculated length (L) to the above equation (3) to calculate the condition factor (CF) of the fish, at step (S104).

In the equation (3), the first parameter (b) and the second parameter (c) are optimized according to the time of year, fish species, and seed of the fish housed in the fish cage (10) to be measured.

More specifically, the user inputs the fish species and seed of the fish housed in the fish cage (10) via the operation unit (106) of Fig. 4 before the start of the processing of Fig. 8. The current time is acquired by a date and time measurement function in the control unit (101) in Fig. 4. The control unit (101) refers to the parameter information corresponding to the inputted fish species among the parameter information (see Figs. 5(a), 5(b)) stored in the storage unit (102), and extracts values of the first parameter (b) and second parameter (c) corresponding to the inputted seed and the current time from the parameter information. Then, the control unit (101) sets the values of the extracted first parameter (b) and second parameter (c) in the equation (3). In step S104, the condition factor (CF) is calculated using the optimized equation (3).

The control unit (101) applies the calculated condition factor (CF) and the length (L) of the fish calculated, at steps (S103) and (S104) to the above equation (2) to calculate the body weight (W) of the fish, at step (S105). The control unit (101) stores the calculated length (L), the condition factor (CF) and the body weight (W) in the storage unit (102) for each fish, at step (S106).

The control unit (101) repeatedly executes the processing of steps (S101) to (S106) until the length (L), the condition factor (CF) and the body weight (W) are acquired for a given number of fish (e.g., 100 fish), at step (S107: NO). During this process, the control unit (101) avoids acquiring the length (L), the condition factor (CF) and the body weight (W) for the same fish in duplicate by tracking the fish included in the imaging viewing angle of the camera system (20).

Thus, when the length (L), the condition factor (CF) and the body weight (W) are obtained for a given number of fish, at step (S107: YES), the control unit (101) causes the display unit (104) to display the calculation result for these fish, at step (S108). This displays, for example, a mean, median or mode of the length (L), the condition factor (CF) and the body weight (W) for these given number of fish. Alternatively, a histogram for each of the length (L), the condition factor (CF) and the body weight (W) of fish may be displayed in the display unit (104). This enables the user to accurately grasp the growth condition (fish length (L), condition factor (CF) and weight (W) of fish in the fish cage (10).

According to the above embodiment, the following effects can be achieved.

As shown in Fig. 4, the fish characteristic determination system (1) is equipped with the camera system (20) configured to acquire the image of the fish, the fish length calculation unit (101a) configured to calculate the length (L) of the fish by processing the image of the fish, and the condition factor calculation unit (101b) configured to calculate the condition factor (CF) of the fish from the calculated length (L). As shown in equation (3) above, the condition factor (CF) is calculated from an exponential function of the length (L). Thus, as shown in Fig. 7(a), the condition factor (CF) of fish can be calculated with high accuracy.

Here, the exponential function may be expressed as equation (3) above. Using equation (3) as the exponential function, as shown in Fig. 7(a), by adjusting the first parameter (b) and the second parameter (c), the condition factor CF of fish can be calculated with high accuracy.

As shown in Fig. 5(a) and Fig. 5(b), the second parameter (c) of equation (3) may change with the time of year at which the fish swims. As shown above, fish change their predation activity depending on the temperature of the water in which the fish swim. Also, the temperature of the water in which the fish swim changes depending on the time of year. Therefore, by changing the second parameter (c) of equation (3) with the time of year in which the fish swim, the accuracy of the condition factor (CF) of the fish calculated from equation (3) can be enhanced.

Further, as shown in Fig. 5 (a) and Fig. 5(b), the first parameter (b) of equation (3) may be the same regardless of the time of year at which the fish swims. As shown above, the larger the length (L) of the fish, the higher the potential for fattening. This is based on the fish's skeleton, not on a degree of predation activity such as time of year or temperature of the water. On the other hand, the first parameter (b) in equation (3) is multiplied by the length (L) of the fish and is a parameter for adjusting the degree of fattening based on the length (L) (skeleton). For this reason, the first parameter (b) may be the same as long as the relationship between the length of the fish and the condition factor (CF) is adjusted, in view of the relationship between the time of year when the fish swims and the temperature of the water in which the fish swims. Therefore, by setting the first parameter (b) of the above equation (3) to be the same regardless of the time of year at which the fish swims, the condition factor (CF) of the fish can be accurately calculated from the above equation (3).

As shown in equation (3), in the exponential function of equation (3), there is only one parameter (second parameter c) that changes with the time of year at which the fish swims. With this, as described above, the condition factor (CF) of the fish can be accurately calculated according to the time of year at which the fish swims.

As shown in Fig. 5(a) and Fig. 5(b), the first parameter (b) and the second parameter (c) are predetermined for a given fish species. The fattening of fish can vary from species to species. Therefore, the first parameter (b) and the second parameter (c) are predetermined for a given fish species, so that the condition factor (CF) of fish of a given fish species can be accurately calculated.

The first parameter (b) and the second parameter (c) are predetermined for a given fish seed. The fattening of fish can be different for each fish seed. For example, the fattening of fish depends on whether it is natural or artificial seed. Therefore, as shown in Fig. 5(a) and Fig. 5(b), the first parameter (b) and the second parameter (c) are predetermined for a given fish seed, so that the condition factor (CF) of fish can be accurately calculated.

The first parameter (b) is set positive when the base (e) of the exponential function of equation (3) is more than 1. That is, the exponential function of equation (3) is an increasing function. Thus, the degree of fattening of fish according to the fish length (L) can be defined by this exponential function. Therefore, from this exponential function, the condition factor (CF) of fish can be accurately calculated.

As shown in Figs. 1 and 2, the fish characteristic determination system (1) may further include the fish cage (10) in which the fish swims. With this, the condition factor (CF) of fish cultured in the fish cage (10) can be calculated with high accuracy.

Here, the fish swimming in the fish cage (10) is preferably raised from artificial fish seed. This makes it easier for the growth characteristic of the fish in the fish cage (10) to be uniform compared to the case of natural fish seed, as described above. Thus, the parameters of the exponential function can be set to suit the fish swimming in the fish cage (10), and the condition factor (CF) of the fish in the fish cage (10) can be calculated with high accuracy.

The present invention is not limited to the above embodiment. In addition, the embodiment of the present invention can be changed in various ways other than the above configuration.

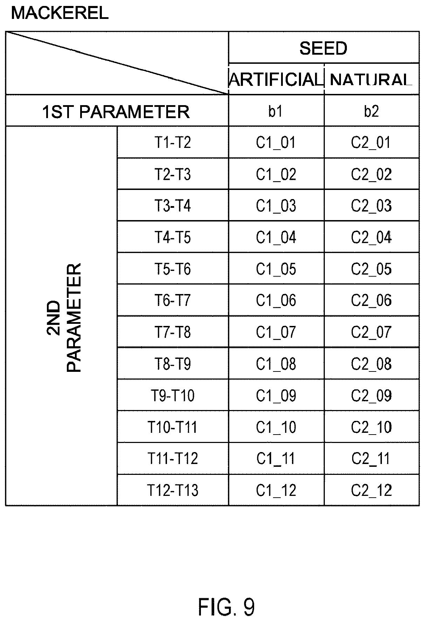

For example, in the above embodiment, the second parameter (c) of equation (3) is set (optimized) for each time of year (month) as shown in Fig. 5(a) and Fig. 5(b), but as shown in Fig. 9, the second parameter (c) of equation (3) may be set (optimized) for each temperature of the water in which the fish swims. In Fig. 9, T1-T2 indicates the temperature range between temperatures T1 and T2, and T2-T3 indicates the temperature range between temperatures T2 and T3. After T3-T4, the temperature range is similarly indicated.

As noted above, the temperature of the water changes the activity of fish predation. Therefore, by setting (optimizing) the second parameter (c) of equation (3) for each temperature of the water in which fish swim, the condition factor (CF) of fish can also be calculated with high accuracy from equation (3).

However, in this case, when calculating the condition factor (CF) of fish, it is necessary to further measure the temperature of the water in the fish cage (10) and input it to the processing unit (50). The control unit (101) extracts the value of the second parameter (c) corresponding to the inputted temperature from the parameter information (parameter information of the corresponding fish species) in Fig. 9 and sets it to the equation (3).

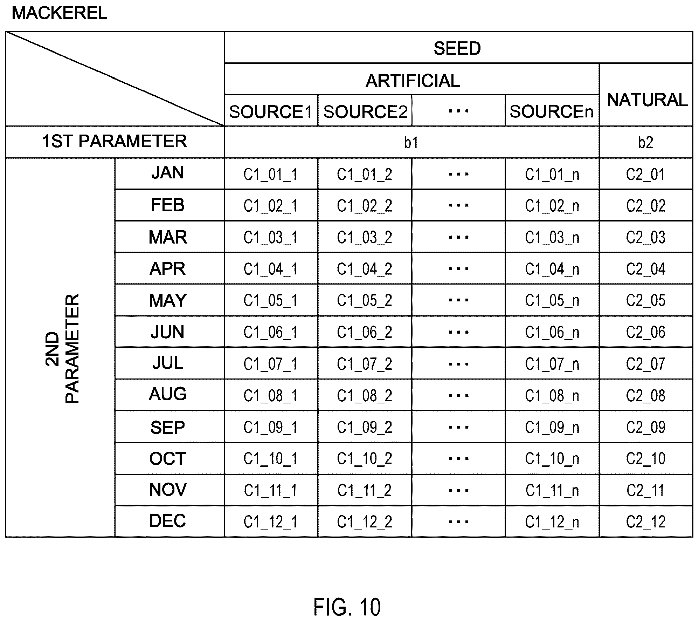

In the above embodiment, as shown in Fig. 5(a) and Fig. 5(b), the type of seeds in the parameter information is classified into two types: artificial seeds and natural seeds, but the type of seeds in the parameter information is not limited to this. For example, as shown in Fig. 10, the artificial seeds in the parameter information may be further classified according to a production area (source) of the parent fish. In addition, the artificial seeds in the parameter information may be classified according to other items such as lots and producers.

In the above embodiment, the Napier's constant e is used as the base of equation (3), but the base of equation (3) may be any another number. Even when a number other than the Napier's constant e is used as the base of equation (3), equation (3) may be an increasing function as shown in Fig. 6(a), as long as the first parameter (b) and the second parameter (c) are optimized according to the time of year (or water temperature) and seed. In this case, if the base of equation (3) is more than 1, as above, the first parameter (b) may be set to a positive value, and if the base of equation (3) is less than 1, the first parameter (b) may be set to a negative value. This makes equation (3) an increasing function as in Fig. 6(a).

In the above embodiment, at step (S105) of Fig. 8, the body weight (W) of the fish is calculated by applying the condition factor (CF) calculated by equation (3) and the fish length (L) to equation (2), but the calculation of the body weight (W) of the fish may be omitted.

In the above embodiment, the above equation (3) is used as the formula of the exponential function for calculating the condition factor (CF) of the fish, but the formula of the exponential function for calculating the condition factor (CF) is not limited to this. For example, the following equation may be used as the formula for calculating the condition factor (CF).

$$CF=e^{b\times L+d\times H+c} \qquad (7)$$

In equation (7), body height (H) is included as a variable, and a third parameter (d) that is multiplied by this variable, is added, compared with equation (3) above. In this case, the third parameter (d) along with the first parameter (b) and the second parameter (c) is optimized for each fish species, seed and time of year (or water temperature). Thus, the condition factor (CF) can be calculated with high accuracy, as in the above embodiment.

Also, in the above embodiment, the camera system (20) is a configuration of a stereo camera including the two cameras (21, 22) but the camera system (20) may be a configuration including only one camera. In this case, a means for calculating a distance to the fish on the image acquired by the camera may be further placed in the camera system (20). For example, an ultrasonic transducer that transmits and receives ultrasonic waves to and from an imaging area of the camera may be used as this means. From echo data of this device, the distance to the fish on the captured image of the camera is calculated. From this distance and the size of the fish on the camera's image, the length (L) (fork length, etc.) of the fish is calculated.

Alternatively, the camera system (20) may be a time-of-flight (TOF) camera. In this case, a distance image is acquired by mapping a distance to an object included in the imaging field of the TOF camera in terms of pixels of the imaging element of the TOF camera. From this distance image, an area with approximately the same distance and corresponding to a fish shape is extracted as a fish area. Then, the length (L) of the fish is calculated from the distance of this area on the distance image (for example, an average value of the distances of this area) and the length of this area (the width in the length direction of the fish).

In the above embodiment, the fish length calculation unit (101a), the condition factor calculation unit (101b) and the fish weight calculation unit (101c) are realized as the functions of the control unit (101) given by the program stored in the storage unit (102), but these need not necessarily be realized as the functions given by the program stored in the storage unit (102). For example, one or more of these functions may consist of a field-programmable gate array (FPGA) or hardware with integrated logic circuits.

The fish characteristic determination system (1) is not limited to the configuration shown in Fig. 1. The X-axis and Y-axis widths and the Z-axis depth of the fish cage (10) may be changed accordingly. The net (2c) may not necessarily hang in a rectangular shape but may hang in an arc shape.

Embodiments of the present invention may be modified in various ways within the scope of the claims.

**Claims**

1. A fish characteristic determination system for determining a characteristic of a fish swimming in water, the system comprising:

   a camera system (20) configured to acquire an image of the fish;
   a fish length calculation unit (101a) configured to calculate a length of the fish by processing the image of the fish; and
   a condition factor calculation unit (101b) configured to calculate a condition factor of the fish from the calculated length, wherein the condition factor is calculated from an exponential function of the length.

2. The system of claim 1, wherein the exponential function is of the form $CF=a^{b.L+c}$, where (CF) is the condition factor, (L) is the length, (a) is the base of the exponential function, (b) is a first parameter and (c) is a second parameter.

3. The system of claim 2, wherein the second parameter (c) changes with a time of year at which the fish swims or a temperature of the water in which the fish swims.

4. The system of claim 2 or 3, wherein the first parameter (b) is the same regardless of a time of year at which the fish swims or a temperature of the water in which the fish swims.

5. The system of any of claims 2 to 4, wherein in the exponential function, there is only one parameter (c) that changes with a time of year at which the fish swims or a temperature of the water in which the fish swims.

6. The system of any of claims 2 to 5, wherein the first parameter (b) and the second parameter (c) are predetermined for a given fish species.

7. The system of any of claims 2 to 6, wherein the first parameter (b) and the second parameter (c) are predetermined for a given fish seed.

8. The system of any of claims 2 to 7, wherein

   when the base (a) of the exponential function is more than 1, the first parameter (b) is positive, and
   when the base (a) of the exponential function is less than 1, the first parameter (b) is negative.

9. The system of any one of the preceding claims, wherein the exponential function is an increasing function.

10. The system of any of the preceding claims, further comprising:
    a fish cage (10) in which the fish swims.

11. The system of claim 10, wherein the fish swimming in the fish cage (10) is raised from an artificial fish seed.

12. A fish characteristic determination method for determining a characteristic of a fish swimming in water, the method comprising:

    acquiring an image of the fish;
    calculating a length of the fish by processing the image of the fish; and
    calculating a condition factor of the fish from the calculated length, wherein the condition factor is calculated from an exponential function of the length.

13. A computer program comprising instructions which, when the program is executed by a computer, cause the computer to carry out the method of claim 12.

FIG. 1

FIG. 2

FIG. 3

FIG. 4

(a)

**MACKEREL**

| 2ND PARAMETER / 1ST PARAMETER | SEED | |
|---|---|---|
| | ARTIFICIAL b1 | NATURAL b2 |
| JAN | C1_01 | C2_01 |
| FEB | C1_02 | C2_02 |
| MAR | C1_03 | C2_03 |
| APR | C1_04 | C2_04 |
| MAY | C1_05 | C2_05 |
| JUN | C1_06 | C2_06 |
| JUL | C1_07 | C2_07 |
| AUG | C1_08 | C2_08 |
| SEP | C1_09 | C2_09 |
| OCT | C1_10 | C2_10 |
| NOV | C1_11 | C2_11 |
| DEC | C1_12 | C2_12 |

(b)

**HORSE MACKEREL**

| 2ND PARAMETER / 1ST PARAMETER | SEED | |
|---|---|---|
| | ARTIFICIAL b1 | NATURAL b2 |
| JAN | C1_01 | C2_01 |
| FEB | C1_02 | C2_02 |
| MAR | C1_03 | C2_03 |
| APR | C1_04 | C2_04 |
| MAY | C1_05 | C2_05 |
| JUN | C1_06 | C2_06 |
| JUL | C1_07 | C2_07 |
| AUG | C1_08 | C2_08 |
| SEP | C1_09 | C2_09 |
| OCT | C1_10 | C2_10 |
| NOV | C1_11 | C2_11 |
| DEC | C1_12 | C2_12 |

FIG. 5

(a) <u>EMBODIMENT</u>

JAN — MAR — MAY -- JUL -- SEP -- NOV

(b) <u>REFERENCE EXAMPLE</u>

SPRING  SUMMER  AUTUMN  WINTER

FIG. 6

EP 4 434 334 A1

FIG. 7

```
        ┌─────────────┐
        │    START    │
        └─────────────┘
               │
               ▼                           S101
   ┌───────────────────────────┐
   │       ACQUIRE IMAGE        │
   └───────────────────────────┘
               │                           S102
               ▼
   ┌───────────────────────────┐
   │     EXTRACT FISH IMAGE     │
   └───────────────────────────┘
               │                           S103
               ▼
   ┌───────────────────────────┐
   │  CALCULATE FISH LENGTH     │
   │      (FORK LENGTH)         │
   └───────────────────────────┘
               │                           S104
               ▼
   ┌───────────────────────────┐
   │ CALCULATE CONDITION FACTOR │
   │      FROM FISH LENGTH      │
   └───────────────────────────┘


                                           S105
   ┌───────────────────────────┐
   │  CALCULATE BODY WEIGHT FROM │
   │ CONDITION FACTOR & FISH LENGTH│
   └───────────────────────────┘
               │                           S106
               ▼
   ┌───────────────────────────┐
   │  STORE FISH LENGTH, CONDITION│
   │   FACTOR & BODY WEIGHT     │
   └───────────────────────────┘
               │                           S107
               ▼
           ◇ ENOUGH          ◇   NO
           ◇ CALCULATION?    ◇ ─────►
               │
              YES                          S108
               ▼
   ┌───────────────────────────┐
   │  DISPLAY CALCULATION RESULT│
   └───────────────────────────┘
               │
               ▼
        ┌─────────────┐
        │     END     │
        └─────────────┘
```

FIG. 8

MACKEREL

| | | SEED | |
|---|---|---|---|
| | | ARTIFICIAL | NATURAL |
| 1ST PARAMETER | | b1 | b2 |
| 2ND PARAMETER | T1-T2 | C1_01 | C2_01 |
| | T2-T3 | C1_02 | C2_02 |
| | T3-T4 | C1_03 | C2_03 |
| | T4-T5 | C1_04 | C2_04 |
| | T5-T6 | C1_05 | C2_05 |
| | T6-T7 | C1_06 | C2_06 |
| | T7-T8 | C1_07 | C2_07 |
| | T8-T9 | C1_08 | C2_08 |
| | T9-T10 | C1_09 | C2_09 |
| | T10-T11 | C1_10 | C2_10 |
| | T11-T12 | C1_11 | C2_11 |
| | T12-T13 | C1_12 | C2_12 |

FIG. 9

EP 4 434 334 A1

MACKEREL

| | | SEED | | | | |
|---|---|---|---|---|---|---|
| | | ARTIFICIAL | | | | NATURAL |
| | | SOURCE1 | SOURCE2 | ... | SOURCEn | |
| 1ST PARAMETER | | b1 | | | | b2 |
| 2ND PARAMETER | JAN | C1_01_1 | C1_01_2 | ... | C1_01_n | C2_01 |
| | FEB | C1_02_1 | C1_02_2 | ... | C1_02_n | C2_02 |
| | MAR | C1_03_1 | C1_03_2 | ... | C1_03_n | C2_03 |
| | APR | C1_04_1 | C1_04_2 | ... | C1_04_n | C2_04 |
| | MAY | C1_05_1 | C1_05_2 | ... | C1_05_n | C2_05 |
| | JUN | C1_06_1 | C1_06_2 | ... | C1_06_n | C2_06 |
| | JUL | C1_07_1 | C1_07_2 | ... | C1_07_n | C2_07 |
| | AUG | C1_08_1 | C1_08_2 | ... | C1_08_n | C2_08 |
| | SEP | C1_09_1 | C1_09_2 | ... | C1_09_n | C2_09 |
| | OCT | C1_10_1 | C1_10_2 | ... | C1_10_n | C2_10 |
| | NOV | C1_11_1 | C1_11_2 | ... | C1_11_n | C2_11 |
| | DEC | C1_12_1 | C1_12_2 | ... | C1_12_n | C2_12 |

FIG. 10

Europäisches
Patentamt

European
Patent Office

Office européen
des brevets

# EUROPEAN SEARCH REPORT

Application Number

EP 23 16 3855

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/142413 A1 (MAREL HF [IS]; ORIR, JOHANN [IS]; SIGUROSSON GUNNAR TJORVI [IS]) 16 December 2010 (2010-12-16)<br>* page 10, line 15 – page 12, line 21 *<br>* page 15, line 25 – page 16, line 3 *<br>* figure 1 * | 1-13 | INV.<br>A01K61/90 |
| X | US 2021/368748 A1 (JAMES BARNABY JOHN [US] ET AL) 2 December 2021 (2021-12-02)<br>* paragraphs [0027] – [0037]; figure 1 * | 1-13 | |
| X | LÓPEZ-RIVEROS CÉSAR A ET AL: "Precision biometrics data of Atlantic salmon (Salmo salar L.) in commercial grow-out sea-cages: Manual sampling and infrared diode frames compared to processing plant",<br>AQUACULTURAL ENGENEERING, ELSEVIER SCIENCE PUBLISHERS LTD, AMSTERDAM NL,<br>vol. 95, 8 July 2021 (2021-07-08),<br>XP086842135,<br>ISSN: 0144-8609, DOI:<br>10.1016/J.AQUAENG.2021.102179<br>[retrieved on 2021-07-08]<br>* the whole document * | 1-13 | |

TECHNICAL FIELDS SEARCHED (IPC)

A01K
G01B

The present search report has been drawn up for all claims

| Place of search | Date of completion of the search | Examiner |
|---|---|---|
| The Hague | 7 September 2023 | Kiyak, Ismail Utku |

EPO FORM 1503 03.82 (P04C01)

## ANNEX TO THE EUROPEAN SEARCH REPORT
## ON EUROPEAN PATENT APPLICATION NO.

EP 23 16 3855

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2023

| Patent document cited in search report | | Publication date | Patent family member(s) | | Publication date |
|---|---|---|---|---|---|
| WO 2010142413 | A1 | 16-12-2010 | CL | 2011003087 A1 | 18-05-2012 |
| | | | EP | 2440064 A1 | 18-04-2012 |
| | | | WO | 2010142413 A1 | 16-12-2010 |
| US 2021368748 | A1 | 02-12-2021 | NONE | | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FROESE R.** Cube law, condition factor and weight - length relationships: history, meta-analysis and recommendations. *J Appl Ichthyol,* 2006, vol. 22, 241-253

- **FROESE R.** Cube law, condition factor and weight-length relationships: history, meta-analysis and recommendations. *J Appl Ichthyol,* 2006, vol. 22, 241-253